# EUROPEAN PATENT SPECIFICATION

(11) **EP 4 514 582 B1**
(45) Date of publication and mention of the grant of the patent: **01.07.2026**
(21) Application number: 23722098.3
(22) Date of filing: 01.05.2023
(51) Int. Cl.: B29B 17/02, B29K 23/00, B29K 27/06, B29K 67/00, B29K 69/00, B29K 77/00

(54) **HYDROTHERMAL UPGRADING AND SEPARATION OF MIXED PLASTICS**
HYDROTHERMALES AUFBEREITEN UND TRENNUNG VON GEMISCHTEN KUNSTSTOFFEN
VALORISATION HYDROTHERMALE ET SÉPARATION DE PLASTIQUES MÉLANGÉS

(30) Priority: 29.04.2022 EP 22170953; 24.05.2022 EP 22175052
(43) Date of publication of application: 05.03.2025
(73) Proprietor: Nederlandse Organisatie voor toegepast- natuurwetenschappelijk onderzoek TNO, 2595 DA 's-Gravenhage (NL)
(72) Inventor: PELS, Jan Remmert, 2595 DA 's-Gravenhage (NL); ABELHA, Pedro, 2595 DA 's-Gravenhage (NL)
(74) Representative: V.O.
(86) International application number: PCT/NL2023/050235
(87) International publication number: WO 2023/211284

(56) References cited:
- EP-A1- 3 831 566
- WO-A1-02/074845
- DE-A1- 4 304 726
- ALTLAND B L ET AL: "Optimization of the high-pressure, near-critical liquid-based microsortation of recyclable post-consumer plastics", RESOURCES, CONSERVATION AND RECYCLING, ELSEVIER, AMSTERDAM, NL, vol. 15, no. 3, 1 December 1995 (1995-12-01), pages 203 - 217, XP004046663, ISSN: 0921-3449, DOI: 10.1016/0921-3449(95)00031-3

## Description

The invention is in the field of processing and recycling plastic waste. In particular, the invention is directed to a method to retrieve at least a light fraction comprising low-density plastics from plastic waste.

It is widely acknowledged that plastic waste has a negative impact on the environment. Methods to recycle plastics are therefore continuously sought after in attempt to achieve a circular economy *(i.e.* a system of closed loops in which renewable sources are used and used materials lose their value as little as possible).

Typically, a recycling process starts after a plastic product has been rejected during production phase and can be mechanically recycled, or after it reached its end-of-life and is considered waste. The waste is collected and sorted. Sorting typically comprises mechanical sorting first by type of material (e.g. plastics, paper), after which the separate plastics stream is sorted by type of polymer, for instance using infrared spectroscopy. This results in several mono streams and a mixed plastics waste stream. A mono stream ideally comprises substantially one type of polymer or a plurality of similar types of polymers. However mono streams typically do not reach a high enough purity or quality for the materials to be used or to be interchangeable with virgin materials.

Separating plastic waste to high-purity mono streams is thus still challenging and may be further complicated by the material shape or composition (*e.g.* presence of filler, additives, co-polymers, etc.). For instance, waste foils, cups and some bottles are more difficult to separate by these existing methods, leaving a stream that does not optimally allow direct mechanical or chemical recycling. This stream is therefore typically applied in low-grade applications or incinerated. In addition, recycling methods such as mechanical recycling, chemical recycling and depolymerization are often hindered by contaminations of *i.a.* dirt and organic matter still present in the streams.

There are several disclosures describing methods to separate polymers from plastic waste mixtures for higher-grade recycling.

A first example is provided in WO02/074845. Herein, a method for treating mixed plastic-containing waste is described. The method includes mixing the plastic waste and water to obtain a slurry. This slurry is kept at an increased temperature with an autogenous pressure to melt together at least 80 wt% of the plastics. After cooling, the molten mixed plastics solidify, and form purified mixed plastic particles. However, the separation between plastics is not optimal and it delivers still a large low-grade plastic stream, which the method associates with lower value energy applications (*e.g.* to be used as ore reducing agents in blast furnaces or used as secondary fuels in a furnace).

Flotation techniques may also be used, as described in *e.g.* US4132633. Herein, gas bubbles are introduced that selectively adhere to polypropylene and/or polyethylene, to allow for these plastics to float. Another example is described in US5248041. However, flotation techniques are often not good enough for odd-shaped plastic pieces, as contaminates are easily trapped.

Another method is described in US9469049. Herein, a method is described to separate materials from mixed plastic waste. Impurities are separated and the plastic waste is separated in several streams using multiple separation steps. At least one of the separation steps comprises a sink-or-float separation. Disadvantageously, this method requires many processing steps.

It is an object of the present invention to provide an improved method for retrieving plastics from plastic waste that overcomes at least part of the above-mentioned drawbacks. In particular, the method according to the present invention may be used to provide individual plastic streams for further treatment to achieve higher-grade recycling. The present inventors surprisingly found that this can be achieved by mixing plastic waste and superheated water and allowing for phase separation of different layers to occur. It was found that as such, at least a light plastic fraction can be retrieved from the plastic waste.

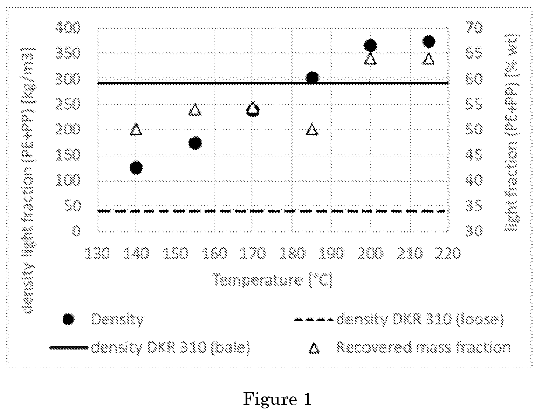

Figure 1 illustrates the experimental results of a retrieved light plastic fraction from plastic waste according to DKR310 at different temperatures.

Thus, in a first aspect the invention is directed to a method for retrieving a light plastic fraction (e.g. polyolefins) from plastic waste. The light plastic fraction comprises low-density plastics, having a density of less than 1 g/cm³ at 20 °C. Thus having a density of less than water. The method comprises the steps of:
- providing the plastic waste and superheated water in a vessel at a temperature between 120 °C and 240 °C to obtain a superheated aqueous plastic mixture;
- agitating the superheated aqueous plastic mixture allowing for phase separation to obtain the light plastic fraction on top of an aqueous fraction, and to obtain a heavy plastic fraction below the aqueous fraction, wherein the heavy plastic fraction comprises high-density plastics, having a density higher than 1 g/cm³ at 20 °C (*i.e.* a relative density higher than 1);
- separating the light plastic fraction from the heavy plastic and aqueous fractions to obtain a retrieved light plastic fraction.

In a particular embodiment, the method comprises feeding the plastic waste to a vessel comprising water to obtain an aqueous plastic mixture and heating said mixture to a temperature between 120 °C and 270 °C to obtain the superheated aqueous plastic mixture. Providing heat to the water may be done before, during and/or after feeding the plastic waste and during agitating the aqueous mixture. Preferably, the water is heated before feeding the plastic waste as this requires less energy. It may be appreciated however, that during the agitation, the temperature of the aqueous plastic mixture must remain sufficiently high for the water to remain superheated.

It was found that the present process does not require the addition of alkaline. Accordingly, the superheated water and/or the superheated aqueous plastic mixture are preferably essentially free from added alkaline components.

The method comprises agitating the aqueous plastic mixture allowing for phase separation to occur before and during melting in order to obtain the light plastic fraction on top of an aqueous fraction and a heavy plastic fraction below the aqueous fraction. The fractions separate based on their relative densities as the light plastic fraction comprises low-density plastics that have a density lower than 1 g/cm³ at 20 °C (*i.e.* lower than the density of water) and the heavy plastic fraction comprises high-density plastics that have a density higher than 1 g/cm³ at 20 °C (*i.e.* higher than the density of water). It may be appreciated that the light plastics fraction as a whole also has a density lower than 1 g/cm³ at 20 °C due to the large content of low-density plastics in this fraction. Similarly, it may be appreciated that the heavy plastics fraction as a whole has a density higher than 1 g/cm³ at 20 °C. After the phase separation has occurred, the light plastic fraction is separated from the heavy plastic and aqueous fractions to obtain a retrieved light plastic fraction.

The plastic waste to be hydrothermally upgraded is typically a mechanically separated stream originating from an industrial and/or domestic raw plastic waste main stream. For example, typical plastic waste that can be used for the method of the present invention is plastic waste according to the DKR-310 and/or the DKR-350 standard. The DKR standard is established by the German "Deutsche Gesellschaft für Kreislaufwirtschaft und Rohstoffe mbH (DKR)".

Plastic waste according to the DKR-310 standard comprises foils consisting of at least 92 wt% of one specific polymer type. According to the standard, the foils should have a surface area larger than DIN A4, like plastic bags and wrapping foils. Plastic waste according to the DKR-350 standard comprises packaging materials with at least 90 wt% typical packaging plastics.

Although large pieces of plastic waste can be fed to the vessel, according to the present invention, it is preferred that the plastic waste comprises, preferably essentially consists of pieces of which the largest dimension is at most 150 mm, preferably at most 100 mm, more preferably at most 50 mm, most preferably at most 20 mm. Accordingly, DKR-310, DKR-350 or other type of plastic waste streams containing large pieces is preferably first subjected to a pre-treatment step, such as shredding or milling. It was found that when the average size of the plastic waste decreases, the purity of the light plastic fraction increases. Accordingly, it is preferred that the plastic waste has an average size of at most 150 mm, preferably at most 100 mm, more preferably at most 50 mm, preferably at most 20 mm, considering the largest dimension of the plastic waste pieces.

It is further preferred that the plastic waste comprises polyolefins, as these typically have a density lower than 1 g/cm³ at 20 °C. In particular, it is preferred that the plastic waste comprises at least 50 wt%, preferably at least 60 wt%, more preferably at least 65 wt%, most preferably at least 70 wt% polyolefins based on the total weight of the plastic waste.

The most common examples of polyolefins are polyethylene (PE) and polypropylene (PP). It is accordingly preferred that the light plastics comprise polyolefins, preferably polypropylene (PP) and/or polyethylene (PE). In fact, the light plastic preferably comprise at least 50 wt%, preferably at least 60 wt%, more preferably at least 65 wt%, most preferably at least 70 wt% PP and/or PE based on the total weight of the plastic waste.

Heavy plastics that are typically present in the plastic waste are polyethylene terephthalate (PET), polycarbonate (PC), polyamides (PA) and/or polyvinyl chloride (PVC). These polymers have a density higher than 1 g/cm³ at 20 °C. Accordingly, the heavy plastics of the present invention preferably comprises these polymers individually or in any combination thereof.

The type of vessel that can be used for the present invention is not particularly limiting, any vessel that can accommodate the conditions of the method according to the present invention may suffice.

The term superheated aqueous plastic mixture herein means that the aqueous plastic mixture is in a superheated state. In the present invention, the water is superheated to a temperature between 120 °C and 270 °C. Superheating is a term used to indicate that a liquid, here water, is heated to a temperature higher than its boiling point under atmospheric pressure. Boiling of the liquid at the superheated pressure is prevented with an increased pressure. The pressure may in the method according to the present invention be autogenous.

By providing heat and agitating the superheated aqueous plastic mixture, at least part of the low-density plastics may melt to obtain at least partially molten plastics. Upon melting of the low-density plastics, the low-density plastics tend to contract into granular-like or sphere-like shaped particles. This shape is, without wishing to be bound by theory, believed to be caused by a combination of agitating the aqueous plastic mixture forcing partial immersion in the water (surface tension forces) and by shape memory of the plastic material. Shape memory refers to the tendency of the plastics to at least partially return the original shape of the plastic material. Additionally, the agitation may provide shear forces on the plastics that contribute to the formation of smaller sized granular-like or sphere-like materials. The at least partially molten low-density plastics therefore preferably comprises a granular-like material. The present method may further comprise cooling the molten plastics to solidify these such that the light plastic fraction comprises a granular-like material comprising the low-density plastics.

The average particle size of the granular-like material is typically up to 10 mm, preferably up to 5 mm.

Advantageously, the granular-like material has a relatively bulk dense packing, which allows for efficient transportation. Additionally, reuse is typically simplified as the shape of the material approximates the shape properties of granulated virgin materials. Further, the shape allows for a higher purity because less contaminants may be trapped by the low-density plastics. Another advantage includes the ease of drying the granular-like material.

The present inventors found that the temperature to which the superheated aqueous plastic mixture is heated may be of influence to the outcome of the method. If the water is superheated to a relatively high temperature, more low-density plastics melt, typically resulting in a higher purification and better separation. The viscosity of the aqueous plastic mixture may accordingly be lowered with increasing temperature, where additionally, a higher temperature typically results in smaller granular-like or sphere-like materials of the molten low-density plastics. While the term viscosity is typically used to describe a property of a fluid or a continuous mixture of fluid and solids, it may be appreciated that herein the viscosity relates to the aqueous plastic mixture as a whole. A lower viscosity thus typically allows for a less dense mixture. However, the temperature preferably does not exceed 270, more preferably 250 °C, as plastics may degrade at such high temperatures. Further, compounds may be formed that transfer into the aqueous fraction which compounds can be detrimental for further processing thereof such as digestion (*vide infra*)*.* Generally, the temperature to which the superheated aqueous plastic mixture is heated is between 120 °C and 240 °C, preferably 180 °C and 240 °C, more preferably between 190 °C and 230 °C, most preferably between 200 °C and 220 °C. This temperature range can provide the optimal balance between viscosity, quantity of recovered low-density and/or high-density polymers from the plastic waste, purity of the fractions, size of the molten low-density plastics, energy consumption, degradation of the plastics and formation of toxic compounds.

Agitation may be achieved by any means known to the skilled person. Examples include stirring with any type of mechanical stirrer, by using jets, or (rapid) recirculation. Jets and recirculation may be preferred, as this minimizes entanglement of the plastics in the agitation means. The agitation is believed to also allow for organic and/or inorganic dirt that has stuck to the low and/or high-density plastics to be physically separated from the plastics. It is generally found that increasing the intensity of the agitation allows for cleaner and smaller granular-like or sphere-like materials to be formed. Without wishing to be bound by theory, is believed that the sizes decrease with increasing stirring intensity due to the shearing forces that are applied to the plastics. It may be appreciated that another factor influencing the final size of the granules is the initial particle size of the plastic waste as provided in the vessel. Depending on the desired size of the granules, the initial particle size and agitation intensity may thus be altered. It is, however, noted that care should be taken that the agitation is not too intense such that phase separation of the fraction no longer occurs, or too minimal for efficient cleaning and separation of the fractions.

Typically, phase separation occurs after a period of at least 5 minutes, such as roughly 30 minutes, of agitation and superheating. However, the optimal residence time is dependent on *i.a.* the composition of the plastic waste, temperature and agitation intensity.

As mentioned above, at least three fractions are formed, *i.e.* the light plastic fraction, the aqueous fraction and the heavy plastic fraction. Besides relative densities, the fractions can also be distinguished on their relative plastics content. The light plastic fraction is most enriched in low-density plastics compared to the other two fractions, while the heavy plastic fraction is most enriched in high-density plastics compared to the other two fractions. The aqueous fraction is poorer in low-density plastics compared to the light plastic fraction and is poorer in high-density plastics compared to the heavy plastic fraction. The light plastic fraction comprises the low-density plastics which are at least partially melted or shrank as a result of the superheated water. This fraction forms as the top layer, due to the relative densities of the fractions. The light plastic fraction can be easily retrieved after phase separation by any suitable technique known to the skilled person. Such techniques might include e.g. hydrocyclones, filtration and/or sieving. The light plastic fraction may be retrieved while the at least partially molten low-density plastics are still in their molten state, or the fraction may be retrieved when the at least partially molten low-density plastics are solidified, e.g. by cooling. It may be appreciated that it is also possible that some partially molten low-density plastics are still in their molten state, while others are solidified.

The present invention enables that the light plastic fraction is of very high purity, which allows recycling of this fraction. That is, it was found that the content of the retrieved light plastic fraction can be at least 95 wt%, typically even at least 99 wt% of low-density plastics, *e.g.* PE and/or PP, based on the total dry weight of the light plastic fraction. The dry weight refers to the total weight of the fraction after retrieving and drying the fraction. Typically, after separation and allowing dripping of some of the aqueous fraction (mainly water), the moisture content is between 30-40%wt, based on the total weight of the light plastic fraction. This may further be subjected to thermal drying, in which case, the moisture content is typically below 1%wt. It may thus be appreciated that some water is left after drying, but this is typically negligible. Advantageously, the present method can result in that the light plastic fraction contains significantly reduced amounts of heteroatoms e.g. oxygen, chlorine, nitrogen and/or sulfur. The separated light plastic fraction may thus be suitably subjected to further processing such as dissolution/solvolysis for mechanical recycling, pyrolysis and/or naphtha cracking. In particularly preferred embodiments, the retrieved light plastic fraction comprises less than 0.050 wt%, preferably less than 0.010 wt% chloride, and/or less than 0.100 wt% sulfur, and/or less than 0.100 wt% nitrogen, and/or less than 3.0 wt% oxygen based on the total dry weight of said retrieved light plastic fraction.

In preferred embodiments, the retrieved light plastic fraction has a higher heating value (HHV) of 42 MJ/kg or more, preferably of 43 MJ/kg or more.

The aqueous fraction forms as a middle layer. The aqueous fraction typically comprises biogenic materials. Biogenic materials generally comprise organic material produced by the physiologic activities of organisms such as plants and/or animals. Part of the biogenic materials can be dissolved, but it may also be suspended in the aqueous fraction (*e.g.* cellulose). The biogenic materials may, for instance, include wood, waste food and/or cellulose fibers from paper and cardboard. The cellulose fibers may be suspended. Further, the aqueous fraction may comprise watersoluble constituents such as salts and/or sugars. The aqueous fraction may comprise chloride (*e*.*g.* hydrogen chloride or chloride salts). In fact, advantageously, the present method may also be suitable for dechlorination of chlorine-containing plastics (*i.a.* PVC), if temperature is extended to 250 °C. It may further be appreciated that in case some biodegradable polymers are present in the plastic mixture that they typically depolymerize into monomers under the conditions of the present invention and dissolve in the aqueous fraction. The monomers may be retrieved to allow for further processing.

The aqueous fraction can be retrieved by any suitable means, for instance by using hydrocyclones, filtering and sieving, or a combination thereof. Accordingly, the method may further comprise retrieving the aqueous fraction from the aqueous plastic mixture. After retrieval, the aqueous fraction can be subjected to further treatment such as digestion, as is known to follow for example the TORWASH^{®} method as described in *i.a.* WO2013/162355.

The heavy plastic fraction comprises the high-density plastics. These plastics typically have higher melting points than the low-density plastics. However, it may be appreciated that some of the high-density plastics may melt at the conditions of the present methods. Similarly, upon melting the high-density plastics may form granular-like material. This shape is advantageous as it typically does not allow for much air or other light materials to be trapped. The limited to absent inclusion of air or other light materials allows for the high-density plastics to indeed sink instead of undesirably floating due to an artificially low-density. Further, other contaminants can be present in the original plastic waste which are insoluble in the aqueous fraction. Such contaminants can include inorganic materials such as sand, metal, glass, additives and/or pigments. As the density thereof is typically above 1 g/cm³, these contaminants often sink below the aqueous fraction and are typically part of the heavy plastic fraction. Accordingly, the heavy plastic fraction may further comprise an non-plastic insoluble fraction comprising sand, metal, glass, additives and/or pigments. The heavy plastic fraction may also be retrieved by any suitable means, such as screws. Accordingly, the method may further comprise retrieving the heavy plastics fraction from the aqueous plastic mixture. Additionally, the method may also comprise separation of the high-density plastics from the non-plastic insoluble fraction. Separation of the high-density plastics from sand, metal, glass may be achieved by separation based on density/size differences. Separation from the metal can be done by e.g. magnetic, or eddy current separation.

There is no particular order for retrieving the fractions. However, it may be appreciated that the aqueous fraction cannot be retrieved first, as retrieving the light plastic fraction is then unnecessarily complicated. Typically, the high value products are contained in the light plastic fraction. Therefore, often this fraction is retrieved first, leaving a two-layer system of the aqueous fraction on top of the heavy plastic fraction. These fractions can then be each be retrieved. It may be appreciated that a minor amount of the aqueous fraction can be separated with the light plastic fraction. However, the majority, such as essentially all, of the aqueous fraction is typically left after separating the light plastic fraction, such as left on top of the heavy plastic fraction.

The ease of the retrieval is at least partially determined by the cleanliness of the phase separation of the fractions. The phase separation is in turn at least partially determined by the agitation intensity (*vide supra*)*.* Besides the agitation intensity, the liquid to solid (L/S) ratio also determines the ease of phase separation, purity and retrieval. Proper L/S ratio and agitation results in a well dispersed superheated aqueous plastic mixture. The liquid to solid ratio herein refers to the weight ratio of the water to the plastic waste. More liquid provides more space for the fractions to physically separate. For instance, more liquid allows for the top light plastics fraction to be located further away from the bottom heavy plastics fraction (*i.e.* the aqueous fraction has more volume). Further, more liquid results in a less viscous aqueous plastic mixture, thus allowing for more relative movement of the plastics to each other. Additionally, the higher the L/S ratio, the more impurities can be contained in the aqueous fraction. The optimal L/S ratio therefore depends on the composition of the plastic waste. In general, if more biogenic material is present, a larger L/S ratio in the vessel is preferred. Typically, the L/S ratio is at least 10:1, preferably at least 15:1, more preferably at least 20:1, most preferably the ratio is between 20:1 and 40:1.

In an embodiment of the present invention, the aqueous plastic mixture may contain agents such as surfactants and/or pH correctors or regulators (e.g. buffering agents) to help removing ink, or other additives from the polymeric materials. These agents can be added in any step of the process before and during superheating, e.g. to the water before or after mixing the water with the plastic material or to the plastic waste before this mixing. Suitable surfactants may be cationic, anionic, nonionic or zwitterionic. Preferably, the surfactant is a low-foaming or non-foaming surfactant. Nonionic surfactants are accordingly preferred. Moreover, it is preferred that the agent such as the surfactant is biodegradable, such that is can be digested when the aqueous fraction is subjected to digestion.

The method may be performed batch wise, but a continuous method is preferred. The vessel for the method can appropriately be chosen.

For the purpose of clarity and a concise description, features are described herein as part of the same or separate embodiments, however, it will be appreciated that the scope of the invention may include embodiments having combinations of all or some of the features described.

The present invention can be illustrated by the following nonlimiting examples.

### Example 1 - DKR310 plastic waste treated at different temperatures

Vessels were provided with water and plastic waste according to DKR310 at an L/S ratio of 20. The experiments were carried out with a stirring rate of 600 rpm and a residence time of 30 min. The water was superheated to temperatures ranging from 200-240°C. The respective compositions of the DKR310 waste is provided in Table 1. The plastic waste was shredded prior to providing it to the vessel to obtain a size of maximum 20 mm.

**Table 1**

| *Values are presented on a dry-basis* | |
|---|---|
| Parameter \ material | DKR310 |
| Ash (815 °C) [%wt] | 15.3 |
| C [%wt] | 62.9 |
| H [%wt] | 9.9 |
| N [%wt] | 0.90 |
| S [%wt] | 0.23 |
| O [%wt] | 12.7 |
| Cl [%wt] | 0.31 |
| Higher heating value (HHV) [MJ/kg] | 31.1 |
| Non packed bulk density [kg/m3] | 49 |

The polyolefin content of the provided waste was estimated to be 70 wt%, based on the total weight of the plastic waste.

The light fraction was recovered, dried and analyzed. The experimental conditions and results are presented in Table 2. The results are also illustrated in Figure 1, as well as for a wider range of temperature conditions. The experiments were performed with a smaller scale multiclave system (6x) with 100 ml of individual internal capacity.

**Table 2**

| ** weight ratio; ** fraction from the dry mass input of plastic waste* | | | |
|---|---|---|---|
| Parameter \ test # | 1 | 2 | 4 |
| Input material | DKR310 | DKR310 | DKR310 |
| Set-point [°C] | 200 | 220 | 240 |
| L/S [water/solids]* | 20 | 20 | 20 |
| Stirring [rpm] | 600 | 600 | 600 |
| Residence time [min] | 30 | 30 | 30 |
| Input size [mm] | < 20 | <20 | <20 |
| | | | |
| Polyolefins recovered [%wt] (light fraction)** | 57.2 | 56.3 | 51.2 |
| Non packed bulk density [kg/m3] | 226 | 323 | 348 |
| C [%wt] | 80.9 | 80.3 | 82.2 |
| H [%wt] | 13.3 | 13.2 | 13.3 |
| N [%wt] | 0.135 | 0.243 | 0.055 |
| S [%wt] | 0.039 | 0.056 | 0.036 |
| O [%wt] | 3.8 | 2.3 | 2.2 |
| Cl [%wt] | 0.028 | 0.019 | 0.012 |
| Ash (815 °C) [%wt] | 3.7 | 3.3 | 2.8 |
| HHV [MJ/kg] | 43.0 | 43.4 | 44.1 |

Temperature increase was found to have a beneficial effect on the bulk density and in the quantity of the separated light plastic fraction, mainly comprising polyolefins. The temperature increase was also found to have a beneficial effect in increasing the C content, while decreasing the heteroatoms levels. The chemical composition of the light fraction is similar to the chemical composition of commercial polyolefins (including the fillers and additives used in the production process of the plastics).

### Example 2 - DKR310 waste at different input size

A 20L autoclave vessel was provided with water and plastic waste according to DKR310 at an L/S ratio of 20. The experiments were carried out with a stirring rate of 600 rpm and a residence time of 30 min at a temperature of 220 °C. The respective compositions of the DKR310 waste is identical to Example 1 and provided in Table 1. The plastic waste was shredded for one experiment to obtain a size of maximum 20 mm and for one experiment to a maximum of 100 mm.

The polyolefin content of the provided waste was estimated to be 70 wt%, based on the total weight of the plastic waste.

The light fraction was recovered, dried and analyzed. The experimental conditions and results are presented in Table 3. The input particle size increase had a slight influence on the bulk density of the recovered polyolefins, which decreased. The differences on the N and S contents can be attributed to the heterogeneous nature of the input waste. The detection of N in the polyolefins recovered can be attributed to the presence of some polyamides, which proven to be present in concentrations below 1%wt.

**Table 3**

| ** weight ratio; ** fraction from the dry mass input of plastic waste* | | |
|---|---|---|
| Parameter \ test # | 2 | |
| Input material | DKR310 | DKR310 |
| Set-point [°C] | 220 | 220 |
| L/S [water/solids]* | 20 | 20 |
| Stirring [rpm] | 600 | 600 |
| Residence time [min] | 30 | 30 |
| Input size [mm] | <20 | <100 |
| | | |
| Polyolefins recovered [%wt] (light fraction)** | 56.3 | 56.9 |
| Non packed bulk density [kg/m3] | 323 | 278 |
| C [%wt] | 80.3 | 80.9 |
| H [%wt] | 13.2 | 13.3 |
| N [%wt] | 0.243 | 0.100 |
| S [%wt] | 0.056 | 0.033 |
| O [%wt] | 2.3 | 2.4 |
| Cl [%wt] | 0.019 | 0.021 |
| Ash (815 °C) [%wt] | 3.3 | 3.5 |
| HHV [MJ/kg] | 43.4 | 43.6 |

### Example 3 - DKR310 vs. DKR350 plastic waste

Vessels were provided with water and plastic waste according to DKR310 and DKR350. The L/S ratio was set at 20, with a stirring rate of 600 rpm, a temperature of 220 °C and a residence time of 30 min. The respective compositions of the DKR310 and DKR350 waste is provided in Table 4. The plastic waste was shredded to a maximum of 100 mm.

The polyolefin content of the provided waste was estimated to be 70 wt%, based on the total weight of the plastic waste.

**Table 4**

| *Values are presented on a dry-basis* | | |
|---|---|---|
| Patameter \ material | DKR310 | DKR350 |
| Ash (815 °C) [%wt] | 15.3 | 19.8 |
| C [%wt] | 62.9 | 57.9 |
| H [%wt] | 9.9 | 8.3 |
| N [%wt] | 0.90 | 0.64 |
| S [%wt] | 0.23 | 0.12 |
| O [%wt] | 12.7 | 14.9 |
| Cl [%wt] | 0.31 | 0.29 |
| HHV [MJ/kg] | 31.1 | 28.0 |
| Non packed bulk density [kg/m3] | 49 | 58 |

The light fraction was recovered, dried and analyzed. The experimental conditions and results are presented in Table 5. The method proved to be robust and efficient to separate the polyolefins, by using different sources of plastic waste (DKR310 and DKR350).

**Table 5**

| ** weight ratio; ** fraction from the dry mass input of plastic waste* | | |
|---|---|---|
| Parameter \ test # | 3 | 6 |
| Input material | DKR310 | DKR350 |
| Set-point [°C] | 220 | 220 |
| L/S [water/solids]* | 20 | 20 |
| Stirring [rpm] | 600 | 600 |
| Residence time [min] | 30 | 30 |
| Input size [mm] | <100 | < 100 |
| | | |
| Polyolefins recovered [%wt] (light fraction)** | 56.9 | 50.2 |
| Non packed bulk density [kg/m3] | 278 | 418 |
| C [%wt] | 80.9 | 82.4 |
| H [%wt] | 13.3 | 12.2 |
| N [%wt] | 0.100 | 0.075 |
| S [%wt] | 0.033 | 0.008 |
| O [%wt] | 2.4 | 2.8 |
| Cl [%wt] | 0.021 | 0.010 |
| Ash (815 °C) [%wt] | 3.5 | 2.7 |
| HHV [MJ/kg] | 43.6 | 43.6 |

### Example 4 - Aqueous fraction digestion

The aqueous fractions of tests 1, 2, 4 and 6 were obtained and subjected to digestion. The results are provided in Table 6.

**Table 6**

| L/S = 20 | Test | CODtot | biogas | CH4 | CH4/CODtot | 1-CODfinal/CODtot |
|---|---|---|---|---|---|---|
| | | (mg/l) | (nm3/ton) | (% vol) | eff. (%wt) | eff. (%wt) |
| **DKR-310 <20mm** | | | | | | |
| 200C/600rpm | 1 | 5335 | 1.6 | 59.0 | 51.2 | 59.5 |
| 220C/600rpm | 2 | 6011 | 1.7 | 60.8 | 49.5 | 55.9 |
| 240C/600rpm | 4 | 6931 | 1.7 | 64.1 | 45.9 | 53.9 |

| **DKR-350 <100mm** | | | | | | |
|---|---|---|---|---|---|---|
| 220C/600rpm | 6 | 11268 | 3.7 | 54.8 | 51.7 | 58.1 |

### Comparative Example - Purity of the polyolefins light layer processed under WO 02/074845 conditions

A 2L autoclave vessel was provided with water and plastic waste according to DKR310 at an L/S ratio of 4. The experiments were carried out with a stirring rate of 900 rpm and a residence time of 120 min at a temperature of 250 °C, intending to simulate conditions used in WO 02/074845 with the DKR-310. The light fraction was recovered, dried and analyzed. The experimental conditions and results are presented in Table 7.

**Table 7**

| ** weight ratio* | |
|---|---|
| Parameter \ test # | 7 |
| Input material | DKR310 |
| Set-point [°C] | 250 |
| L/S [water/solids]* | 4 |
| Stirring [rpm] | 900 |
| Residence time [min] | 120 |
| Input size [mm] | <20 |
| | |
| C [%wt] | 78.0 |
| H [%wt] | 12.5 |
| N [%wt] | 0.35 |
| S [%wt] | 0.059 |
| O [%wt] | 4.2 |
| Cl [%wt] | 0.066 |
| Ash [%wt] | 4.4 |
| HHV [MJ/kg] | 40.8 |

Results show that based on the relatively low HHV, H and C values and relatively high ash, and heteroatoms (i.e. N, S, O and Cl) the light fraction recovered consisted yet in a mixed plastic material, containing a significant higher fraction of polyamides and PVC, although using harsher washing conditions (i.e. higher temperature and residence time), when compared with the method of the present invention.

## Claims

1. Method for retrieving a light plastic fraction from plastic waste, wherein the light plastic fraction comprises low-density plastics and has a density lower than 1 g/cm³ at 20 °C, wherein said method comprises:
- providing the plastic waste and superheated water in a vessel at a temperature between 120 °C and 270 °C to obtain a superheated aqueous plastic mixture;
- agitating the superheated aqueous plastic mixture allowing for phase separation to occur in order to obtain the light plastic fraction on top of an aqueous fraction, and to obtain a heavy plastic fraction below the aqueous fraction, wherein the heavy plastic fraction comprises high-density plastics and has a density higher than 1 g/cm³ at 20 °C;
- separating the light plastic fraction from the heavy plastic and aqueous fractions to obtain a retrieved light plastic fraction.

2. Method according to the previous claim, wherein the low-density plastics comprise polyolefins, preferably polypropylene (PP) and/or polyethylene (PE).

3. Method according to any of the previous claims, wherein the high-density plastics comprise polyethylene terephthalate (PET), polycarbonate (PC), polyamides (PA) and/or polyvinyl chloride (PVC).

4. Method according to any of the previous claims, further comprising separating the heavy plastic fraction from the aqueous fraction.

5. Method according to any of the previous claims, wherein the aqueous fraction comprises biogenic materials, preferably biogenic organics and/or suspended cellulose fibers.

6. Method according to any of the previous claims, wherein the retrieved light plastic fraction comprises less than 0.050 wt%, preferably less than 0.01 wt% chloride and/or less than 0.100 wt% sulfur, and/or less than 0.100 wt% nitrogen and/or less than 3.0 wt% oxygen, based on the total dry weight of said retrieved light plastic fraction.

7. Method according to any of the previous claims, wherein the retrieved light plastic fraction comprises PE and/or PP in an amount of more than 95 wt%, preferably more than 99 wt% based on the total dry weight of the retrieved light plastic fraction.

8. Method according to any of the previous claims, said method comprising melting at least part of the low-density plastics by contacting the plastic waste and superheated water and/or by agitating the superheated aqueous plastic mixture to obtain at least partially molten plastics, followed by cooling said molten plastics such that the retrieved light plastic fraction comprises a granular-like material comprising the low-density plastics.

9. Method according to any of the previous claims, wherein the heavy plastic fraction further comprises inorganic materials, preferably sand, metal, additives, pigments and/or glass; and wherein the method preferably further comprises separating the heavy plastic fraction from the inorganic materials such as sand, metal, additives, pigments and/or glass.

10. Method according to any of the previous claims wherein the plastic waste comprises at least 55 wt%, preferably at least 60 wt%, more preferably at least 65 wt%, most preferably at least 70 wt% polyolefins based on the total weight of the plastic waste.

11. Method according to any of the previous claims, wherein the plastic waste is according to DKR-310 and/or according to DKR-350 standards.

12. Method according to any of the previous claims, wherein the weight ratio of the water to the plastic waste in the vessel (L/S ratio) is at least 10:1, preferably at least 15:1, more preferably at least 20:1.

13. Method according to any of the previous claims, wherein the plastic waste comprises pieces of which the largest dimension is at most 150 mm, preferably at most 100 mm, more preferably at most 50 mm, most preferably at most 20 mm.

14. Method according to any of the previous claims, wherein the plastic waste and superheated water is provided and/or is agitated in the vessel at a temperature between 180 °C and 240 °C, preferably between 190 °C and 230 °C, most preferably between 200 °C and 220 °C.

15. Method according to any of the previous claims, wherein the method is continuous.

## Patentansprüche

1. Verfahren zur Zurückgewinnung einer leichten Kunststofffraktion aus Kunststoffabfall, wobei die leichte Kunststofffraktion Kunststoffe mit geringer Dichte umfasst und bei 20 °C eine Dichte von weniger als 1 g/cm³ hat, wobei das Verfahren umfasst:
- Bereitstellen des Kunststoffabfalls und überhitzten Wassers in einem Behälter bei einer Temperatur zwischen 120 °C und 270 °C, um eine überhitzte wässrige Kunststoffmischung zu erhalten;
- Rühren der überhitzten wässrigen Kunststoffmischung, um Phasentrennung aufzutreten zu erlauben , um die leichte Kunststofffraktion oberhalb der wässrigen Fraktion zu erhalten und eine schwere Kunststofffraktion unterhalb der wässrigen Fraktion zu erhalten, wobei die schwere Kunststofffraktion Kunststoffe mit hoher Dichte umfasst und bei 20 °C eine Dichte von mehr als 1 g/cm³ hat;
- Trennen der leichten Kunststofffraktion von dem schweren Kunststoff und wässriger Fraktionen, um eine zurückgewonnene leichte Kunststofffraktion zu erhalten.

2. Verfahren nach dem vorstehenden Anspruch, wobei die Kunststoffe mit geringer Dichte Polyolefine, vorzugsweise Polypropylen (PP) und/oder Polyethylen (PE), umfassen.

3. Verfahren nach einem der vorstehenden Ansprüche, wobei die Kunststoffe mit hoher Dichte Polyethylenterephthalat (PET), Polycarbonat (PC), Polyamide (PA) und/oder Polyvinylchlorid (PVC) umfassen.

4. Verfahren nach einem der vorstehenden Ansprüche, ferner umfassend Trennen der schweren Kunststofffraktion von der wässrigen Fraktion.

5. Verfahren nach einem der vorstehenden Ansprüche, wobei die wässrige Fraktion biogene Stoffe, vorzugsweise biogene organische Stoffe und/oder suspendierte Zellulosefasern, umfasst.

6. Verfahren nach einem der vorstehenden Ansprüche, wobei die zurückgewonnene leichte Kunststofffraktion weniger als 0,050 Gew.-%, vorzugsweise weniger als 0,01 Gew.-% Chlorid und/oder weniger als 0,100 Gew.-% Schwefel, und/oder weniger als 0,100 Gew.-% Stickstoff und/oder weniger als 3,0 Gew.-% Sauerstoff, bezogen auf das Gesamttrockengewicht der zurückgewonnenen leichten Kunststofffraktion, umfasst.

7. Verfahren nach einem der vorstehenden Ansprüche, wobei die zurückgewonnene leichte Kunststofffraktion PE und/oder PP in einer Menge von mehr als 95 Gew.-%, vorzugsweise mehr als 99 Gew.-%, bezogen auf das Gesamttrockengewicht der zurückgewonnenen leichten Kunststofffraktion, umfasst.

8. Verfahren nach einem der vorstehenden Ansprüche, wobei das Verfahren Schmelzen zumindest eines Teils der Kunststoffe mit geringer Dichte durch Inkontaktbringen des Kunststoffabfalls mit überhitztem Wasser und/oder durch Rühren der überhitzten wässrigen Kunststoffmischung umfasst, um zumindest teilweise geschmolzene Kunststoffe zu erhalten, gefolgt von Abkühlen der geschmolzenen Kunststoffe, so dass die zurückgewonnene leichte Kunststofffraktion ein körnigartiges Material umfasst, umfassend die Kunststoffe mit geringer Dichte.

9. Verfahren nach einem der vorstehenden Ansprüche, wobei die schwere Kunststofffraktion ferner anorganische Materialien, vorzugsweise Sand, Metall, Additive, Pigmente und/oder Glas, umfasst; und wobei das Verfahren vorzugsweise ferner Trennen der schweren Kunststofffraktion von den anorganischen Materialien wie Sand, Metall, Additiven, Pigmenten und/oder Glas umfasst.

10. Verfahren nach einem der vorstehenden Ansprüche, wobei der Kunststoffabfall mindestens 55 Gew.-%, vorzugsweise mindestens 60 Gew.-%, noch bevorzugter mindestens 65 Gew.-%, am bevorzugtesten mindestens 70 Gew.-% Polyolefine, bezogen auf das Gesamtgewicht des Kunststoffabfalls, umfasst.

11. Verfahren nach einem der vorstehenden Ansprüche, wobei der Kunststoffabfall gemäß Normen DKR-310 und/oder DKR-350 ist.

12. Verfahren nach einem der vorstehenden Ansprüche, wobei das Gewichtsverhältnis von Wasser zu Kunststoffabfall im Behälter (L/S-Verhältnis) mindestens 10:1, vorzugsweise mindestens 15:1, noch bevorzugter mindestens 20:1 ist.

13. Verfahren nach einem der vorstehenden Ansprüche, wobei der Kunststoffabfall Stücke umfasst, deren größte Abmessung höchstens 150 mm, vorzugsweise höchstens 100 mm, noch bevorzugter höchstens 50 mm, am bevorzugtesten höchstens 20 mm ist.

14. Verfahren nach einem der vorstehenden Ansprüche, wobei der Kunststoffabfall und das überhitzte Wasser in den Behälter eingebrachtund/oder darin bei einer Temperatur zwischen 180 °C und 240 °C, vorzugsweise zwischen 190 °C und 230 °C, am bevorzugtesten zwischen 200 °C und 220 °C, gerührt werden.

15. Verfahren nach einem der vorstehenden Ansprüche, wobei das Verfahren kontinuierlich ist.

## Revendications

1. Procédé pour récupérer au moins une fraction de matières plastiques légères à partir de déchets de matières plastiques, dans lequel la fraction de matières plastiques légères comprend des matières plastiques basse densité et a une masse volumique inférieure à 1 g/cm³ à 20 °C, dans lequel ledit procédé comprend :
- l'introduction des déchets de matières plastiques et d'eau surchauffée dans un récipient à une température comprise entre 120 °C et 270 °C pour que soit obtenu un mélange de matières plastiques aqueux surchauffé ;
- l'agitation du mélange de matières plastiques aqueux surchauffé, ce qui permet qu'ait lieu une séparation de phases afin que soit obtenue une fraction de matières plastiques légères au-dessus de la fraction aqueuse et que soit obtenue une fraction de matières plastiques lourdes au-dessous de la fraction aqueuse, dans laquelle la fraction de matières plastiques lourdes comprend des matières plastiques haute densité et a une masse volumique supérieure à 1 g/cm³ à 20 °C ;
- la séparation de la fraction de matières plastiques légères d'avec les fractions de matières plastiques lourdes et aqueuse pour que soit obtenue une fraction de matières plastiques légères récupérée.

2. Procédé selon la revendication précédente, dans laquelle les matières plastiques basse densité comprennent des polyoléfines, de préférence du polypropylène (PP) et/ou du polyéthylène (PE).

3. Procédé selon l'une quelconque des revendications précédentes, dans laquelle les matières plastiques haute densité comprennent du poly(téréphtalate d'éthylène) (PET), du polycarbonate (PC), des polyamides (PA) et/ou du poly(chlorure de vinyle) (PVC).

4. Procédé selon l'une quelconque des revendications précédentes, comprenant en outre la séparation de la fraction de matières plastiques lourdes d'avec la fraction aqueuse.

5. Procédé selon l'une quelconque des revendications précédentes, dans lequel la fraction aqueuse comprend des matériaux biogéniques, de préférence des matériaux organiques biogéniques et/ou des fibres de cellulose en suspension.

6. Procédé selon l'une quelconque des revendications précédentes, dans lequel la fraction de matières plastiques légères récupérée comprend moins de 0,050 % en poids, de préférence moins de 0,01 % en poids de chlore et/ou moins de 0,100 % en poids de soufre et/ou moins de 0,100 % en poids d'azote et/ou moins de 3,0 % en poids d'oxygène, par rapport au poids sec total de ladite fraction de matières plastiques légères récupérée.

7. Procédé selon l'une quelconque des revendications précédentes, dans lequel la fraction de matières plastiques légères récupérée comprend du PE et/ou du PP en une quantité supérieure à 95 % en poids, de préférence supérieure à 99 % en poids par rapport au poids sec total de la fraction de matières plastiques légères récupérée.

8. Procédé selon l'une quelconque des revendications précédentes, ledit procédé comprenant la fonte d'au moins une partie des matières plastiques basse densité par mise en contact des déchets de matières plastiques et d'eau surchauffée et/ou par agitation du mélange de matières plastiques aqueux surchauffé pour que soient obtenues des matières plastiques au moins partiellement fondues, suivie d'un refroidissement desdites matières plastiques fondues de façon que la fraction de matières plastiques légères récupérée comprenne un matériau de type granulaire comprenant les matières plastiques basse densité.

9. Procédé selon l'une quelconque des revendications précédentes, dans lequel la fraction de matières plastiques lourdes comprend en outre des matériaux inorganiques, de préférence du sable, du métal, des additifs, des pigments et/ou du verre ; et dans lequel le procédé comprend en outre de préférence la séparation de la fraction de matières plastiques lourdes d'avec les matériaux inorganiques tels que du sable, du métal, des additifs, des pigments et/ou du verre.

10. Procédé selon l'une quelconque des revendications précédentes, dans lequel les déchets de matières plastiques comprennent au moins 55 % en poids, de préférence au moins 60 % en poids, mieux encore au moins 65 % en poids, tout spécialement au moins 70 % en poids de polyoléfines par rapport au poids total des déchets de matières plastiques.

11. Procédé selon l'une quelconque des revendications précédentes, dans lequel les déchets de matières plastiques sont conformes aux normes DKR-310 et/ou DKR-350.

12. Procédé selon l'une quelconque des revendications précédentes, dans lequel le rapport en poids de l'eau aux déchets de matières plastiques dans le récipient (rapport L/S) est d'au moins 10/1, de préférence d'au moins 15/1, mieux encore d'au moins 20/1.

13. Procédé selon l'une quelconque des revendications précédentes, dans lequel les déchets de matières plastiques comprennent des morceaux dont la dimension la plus grande est d'au plus 150 mm, de préférence d'au plus 100 mm, mieux encore d'au plus 50 mm, tout spécialement d'au plus 20 mm.

14. Procédé selon l'une quelconque des revendications précédentes, dans lequel les déchets de matières plastiques et l'eau surchauffée sont introduites et/ou sont agitées dans le récipient à une température comprise entre 180 °C et 240 °C, de préférence entre 190 °C et 230 °C, tout spécialement entre 200 °C et 220 °C.

15. Procédé selon l'une quelconque des revendications précédentes, dans lequel le procédé est continu.
